# FASCICULE DE BREVET EUROPEEN

(11) **EP 0 733 895 B1**
(45) Date de publication et mention de la délivrance du brevet: **03.07.2002**
(21) Numéro de dépôt: 96400504.5
(22) Date de dépôt: 12.03.1996
(51) Int. Cl.: G01N 17/00

(54) **Capteur de surveillance de liquide de refroidissement de circuits échangeur de chaleur**
Überwachungsfühler für Kühlflüssigkeit eines Wärmetauscherkreislaufs
Detector for monitoring the cooling liquid of heat exchanger circuits

(30) Priorité: 21.03.1995 FR 9503387
(43) Date de publication de la demande: 25.09.1996
(73) Titulaire: INSTITUT FRANCAIS DU PETROLE, 92500 Rueil Malmaison (FR)
(72) Inventeur: Goldenberg, Emanuel, F-78300 Poissy (FR)

(56) Documents cités:
- EP-A- 0 511 880
- WO-A-91/16614
- CA-A- 1 076 894
- FR-A- 2 689 240
- US-A- 4 306 127
- US-A- 4 313 042

## Description

La présente invention concerne le domaine de la surveillance in situ de fluides de refroidissement circulant dans des échangeurs de chaleur, et plus particulièrement de la surveillance de leur niveau de corrosion.

Préférentiellement, la présente invention peut être utilisée pour surveiller à quel moment le liquide de refroidissement circulant dans des moteurs à combustion interne, devient corrosif.

Il est connu que dans un moteur à combustion interne, le liquide de refroidissement outre sa fonction d'échange thermique permet aussi de protéger le circuit de refroidissement du moteur contre les principales formes de dégradation auxquelles il est soumis. La corrosion par piqûre, l'arrachement de métal par cavitation la corrosion électro-chimique... sont les formes de dégradation les plus souvent constatées, et qui si elles ne sont pas détectées suffisamment tôt, risquent de créer de fortes perturbations voire l'endommagement du moteur.

Afin d'assurer cette fonction de protection, les liquides de refroidissement nécessitent donc une formulation particulièrement bien étudiée. Ils contiennent des additifs destinés à protéger les différents métaux du circuit de refroidissement.

Cependant, en fonctionnement, la formulation du liquide de refroidissement peut varier par décomposition ou appauvrissement de certains des additifs.

Cette modification pose problème car du liquide de refroidissement peut alors dégrader certains matériaux du circuit.

Actuellement il est nécessaire de remplacer périodiquement et de façon arbitraire le liquide de refroidissement afin d'éviter des attaques du circuit telles que décrites ci-avant.

Parmi les systèmes de détection et de surveillance connus et d'application voisine, le document US 4 792 791 divulgue un dispositif destiné à surveiller la qualité de l'huile de lubrification d'un moteur grâce à la corrosion d'un élément résistif faisant partie d'un circuit électrique.

Lorsque l'élément résistif est corrodé par l'huile dans lequel il est immergé, sa résistance varie puis cette variation est enregistrée et considérée comme un signe de vieillissement de l'huile.

L'exploitation de la variation de résistance d'un élément sensible corrodable est encore divulguée dans les documents US 4 675 662, US 4 782 332 ou dans la demande de brevet FR 2 689 240 déposée au nom du demandeur.

Bien que de tels systèmes donnent satisfaction puisqu'ils permettent de surveiller le vieillissement d'huile ou d'autre liquide de fonctionnement du moteur, ils ne réagissent que lorsque la dégradation ou le vieillissement du liquide est assez avancée.

On connait par ailleurs un dispositif de surveillance du vieillissement de fluides de refroidissement circulant dans des échangeurs de chaleur, comprenant un élément en contact avec ledit liquide, un élément électrique séparé de l'élément en contact avec le liquide par un volume isolant renfermant un fluide à la pression atmosphérique, ledit élément électrique réagissant au degré de corrosion de l'élément en contact, et une alarme réagissant à une variation du signal de l'élément électrique. Selon ce document, l'élément en contact avec le liquide à surveiller consiste en au moins une pastille constituée d'un matériau par ailleurs en contact avec le liquide dans le circuit. L'élément électrique est ici un élément piezzo électrique dont la fréquence varie avec une variation de pression dans le volume isolant.

Vis-à-vis de cet art antérieur, il existe un besoin pour un capteur plus simple, moins coûteux et ainsi plus fiable, qui pourrait par exemple être monté dans des poids lourds, directement sur le moteur. Un système mécanique basé sur une indication visuelle peut alors répondre à cette attente.

Dans ce but, la présente invention propose un capteur de surveillance du liquide de refroidissement circulant dans un circuit d'un échangeur de chaleur comprenant :
- un support destiné à monter le capteur sur une tubulure du circuit, de telle façon que ledit liquide soit en contact avec une partie au moins du capteur;
- une membrane corrodable en contact avec le liquide,
- un indicateur visuel réagissant au degré de corrosion du liquide;

Selon l'invention, l'indicateur visuel comprend un moyen déplaçable sous l'effet combiné de la rupture de la membrane corrodable et de la différence de pression entre l'intérieur et l'extérieur de la tubulure, au moins un moyen d'étanchéité monté sur le moyen, l'indicateur visuel dépassant en dehors de la tubulure et/ou du support lorsque ladite membrane est corrodée.

Selon l'une de ses caractéristiques, le moyen déplaçable est au moins partiellement recouvert extérieurement d'un film coloré.

Préférentiellement, le moyen déplaçable comprend une zone aimantée et le capteur comprend en outre un contacteur disposé à l'extérieur de la tubulure, coopérant avec la zone aimantée et faisant partie d'un circuit électrique permettant d'activer une alarme lorsque la zone aimantée se trouve en regard du contacteur.

En outre le capteur selon l'invention peut comprendre un second moyen d'étanchéité destiné à empêcher des poussières de pénétrer dans le capteur et de gêner le mouvement du moyen déplaçable.

Selon un mode particulier de réalisation de l'invention, le moyen déplaçable comprend un piston logé et coulissant dans ledit support.

Le second moyen d'étanchéité peut être un joint torrique monté sur le piston.

Selon un autre mode de réalisation de l'invention, le piston comprend une extrémité pointue et le second moyen d'étanchéité est une membrane recouvrant l'orifice du logement du piston, susceptible d'être percée par l'extrémité pointue du piston lorsque celui-ci se déplace vers l'extérieur de la tubulure et/ou du support.

Ainsi la présente invention permet une indication visuelle qui peut être donnée soit par un dispositif mécanique soit à travers un circuit électrique. Les deux moyens peuvent être présents simultanément ou séparément.

D'autres caractéristiques, avantages et détails de la présente invention apparaîtront mieux à la lecture de la description qui va suivre, faite à titre illustratif et nullement limitatif en référence aux figures annexées selon lesquelles :
- La figure 1 est une coupe longitudinale d'un mode de réalisation de l'invention; et
- La figure 2 est une coupe longitudinale d'un autre mode de réalisation de l'invention.

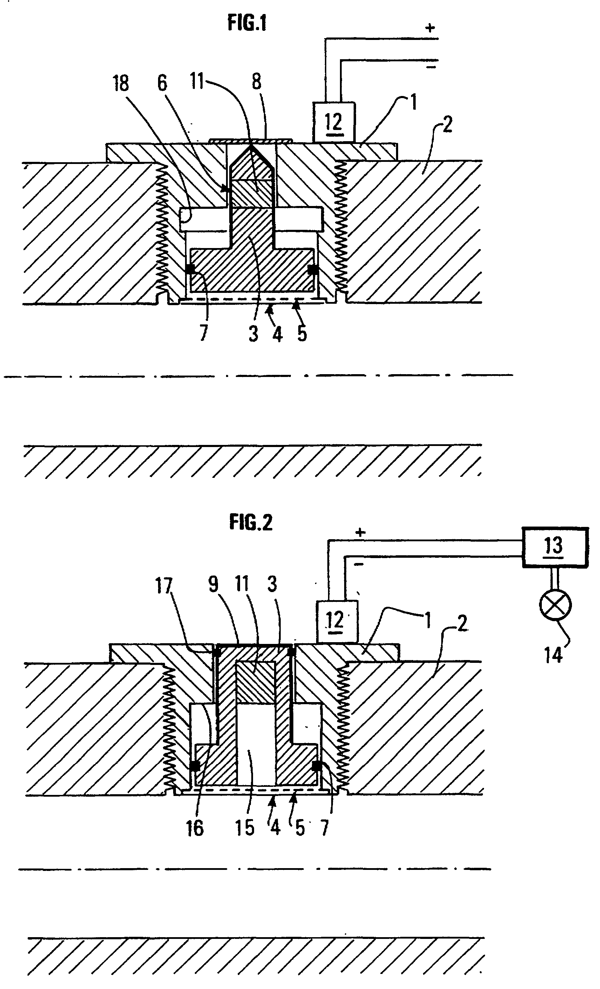

Selon la figure 1, le capteur comprend un support 1 vissé ou fixé par tout moyen connu en soi dans la paroi 2 d'une -tubulure dans laquelle circule le fluide à surveiller.

De préférence le capteur selon l'invention est monté dans un coude du circuit, là où la vitesse du fluide est la plus importante.

Le support 1 présente intérieurement un logement pour un moyen 3 tel qu'un piston déplaçable entre deux positions, comme il va être expliqué plus loin.

Sur le support 1 est fixée une membrane corrodable 4, en contact avec le liquide à surveiller.

Facultativement, une grille-support 5 peut être fixée sur le support 1, derrière la membrane corrodable afin d'éviter des déplacements inopinés du piston 3 ou le déchirement de la membrane corrodable 4 sous l'unique effet de la pression dans le circuit.

Par ailleurs la grille-support 5 peut constituer une butée pour le piston 3, qui l'empêche d'être entrainé vers l'intérieur de la tubulure.

De façon souhaitable, le piston 3 est placé à l'origine au plus près de la grille 5.

Ainsi le piston ne peut plus revenir dans sa position initiale une fois qu'il s'est déplacé en dehors de son logement, même si une dépression vient à se créer à l'intérieur de la tubulure. Tout autre moyen empêchant le retour du piston vers sa position initiale peut bien entendu être envisagé sans sortir du cadre de la présente invention.

En outre une partie au moins du piston 3 est préférentiellement recouverte d'un film coloré 6 destiné à attirer la vue vers lui lorsque le liquide à surveiller est corrodé.

Un élément d'étanchéité tel qu'un joint torique 7 est monté sur le piston 3 afin d'empêcher toute fuite de liquide vers l'extérieur de la tubulure à travers le capteur lorsque la membrane corrodable est percée.

Une seconde étanchéité est prévue, afin d'empêcher l'encrassement de l'intérieur du support 1 par des particules liquides ou solides venant de l'extérieur de la tubulure.

Selon la figure 1, la seconde étanchéité comprend une membrane 8 qui recouvre l'orifice 9 du support 1 du côté extérieur à la tubulure. La membrane 8 est fixée sur l'orifice 9 par tout moyen connu (collage, sertissage...). Le piston 3 présente alors une extrémité pointue 10 susceptible de percer la membrane 8 lorsqu'il se déplace vers l'extérieur de la tubulure.

Selon la figure 2, la seconde étanchéité est réalisée par un joint torique 17 monté sur le piston 3.

Conformément à un autre aspect de l'invention, le moyen déplaçable 3 peut comprendre une zone aimantée 11. Selon la figure 2, la zone aimantée peut être constituée d'un aimant placé au fond d'un trou borgne 15 selon l'axe du piston.

Selon la figure 1 la zone aimantée 11 est incluse dans le piston lui-même.

Le fonctionnement préféré de l'invention est le suivant :

Lorsque la membrane 4 se corrode sous l'action du fluide de refroidissement, elle se rompt et la différence de pression entre l'intérieur et l'extérieur du circuit fait que le piston se déplace selon l'axe longitudinal du capteur, vers l'extérieur de la tubulure (la pression dans un circuit de refroidissement étant en effet supérieure à la pression atmosphérique).

Le déplacement du piston 3, qui selon la figure 1 entraine la rupture de la membrane 8, l'amène jusque dans une position où il est en butée sur un épaulement 16 du support 1 formant logement pour le piston 3. Ainsi le piston 3 dépasse en dehors de la tubulure ou du support 1. Cette protubérance est donc une indication visuelle signalant que le liquide circulant dans la tubulure est corrodé.

Afin d'éviter que le piston 3 ne revienne dans sa position initiale à l'intérieur du support, la zone du support la plus proche de l'épaulement peut présenter une section plus importante 18 dans laquelle le joint torique 7 s'expanse lorsque le piston sort de son logement.

Par ailleurs, si le piston est recouvert extérieurement d'un film coloré 6, il sera d'autant plus visible de l'extérieur.

Selon un autre aspect de l'invention, le piston 3 peut en outre comprendre une zone aimantée 11. Un contacteur 12 qui peut être par exemple un relais "Reed" connu en soi, est monté à l'extérieur de la tubulure de telle façon qu'il se trouve juste en regard de la zone aimantée 11 lorsque celle-ci se trouve aussi à l'extérieur de la tubulure suite au mouvement vers l'extérieur du piston 3.

Dans cette position l'aimant ferme le circuit électrique 13 dont le relai fait partie, ce qui active une alarme 14 ou tout autre témoin du circuit électrique.

Bien entendu, d'autres modifications mineures pourront être apportées par l'homme de métier au capteur qui vient d'être décrit sans sortir du cadre de la présente invention.

## Revendications

1. Capteur de surveillance du liquide de refroidissement circulant dans un circuit d'un échangeur de chaleur comprenant :
- un support (1) destiné à monter le capteur sur une tubulure du circuit, de telle façon que ledit liquide soit en contact avec une partie au moins du capteur;
- une membrane corrodable (4) en contact avec le liquide,
- un indicateur visuel réagissant au degré de corrosion du liquide;
**caractérisé en ce que** l'indicateur visuel comprend un moyen (3) déplaçable sous l'effet combiné de la rupture de la membrane corrodable (4) et de la différence de pression entre l'intérieur et l'extérieur du circuit, au moins un moyen d'étanchéité (7) monté sur le moyen (3), l'indicateur visuel (3) dépassant en dehors de la tubulure et/ou du support (1) lorsque ladite membrane (4) est corrodée.

2. Capteur selon la revendication 1, **caractérisé en ce que** le moyen déplaçable (3) est au moins partiellement recouvert extérieurement d'un film coloré (6).

3. Capteur selon l'une quelconque des revendications 1 ou 2, **caractérisé en ce que** le moyen déplaçable (3) comprend une zone aimantée (11) et **en ce qu'**il comprend en outre un contacteur (12) disposé à l'extérieur de la tubulure, coopérant avec la zone aimantée (11) et faisant partie d'un circuit électrique (13) permettant d'activer l'alarme (14) lorsque la zone aimantée (11) se trouve en regard du contacteur (12).

4. Capteur selon la revendication 1, **caractérisé en ce qu'**il comprend un second moyen d'étanchéité (8 ; 17) destiné à empêcher des particules liquides ou solides de pénétrer à l'intérieur du capteur et de gêner le mouvement du moyen déplaçable.

5. Capteur selon l'une quelconque des revendications précédentes, **caractérisé en ce que** le moyen déplaçable (3) comprend un piston logé et coulissant dans ledit support (1).

6. Capteur selon la revendication 5, **caractérisé en ce que** le second moyen d'étanchéité est un joint torique monté sur le piston.

7. Capteur selon la revendication 5, **caractérisé en ce que** le piston (3) comprend une extrémité pointue (10) et **en ce que** le second moyen d'étanchéité est une membrane (8) recouvrant l'orifice (9) du logement du piston, susceptible d'être percée par l'extrémité pointue (10) du piston lorsque celui-ci se déplace vers l'extérieur de la tubulure.

8. Capteur selon l'une quelconque des revendications précédentes, **caractérisé en ce qu'**il comprend en outre une grille-support (5) fixée sur le support (1) entre ladite membrane corrodable (4) et le piston (3).

## Patentansprüche

1. Überwachungsfühler für in einem Wärmeaustauscherkreis zirkulierende Kühlflüssigkeit, umfassend:
- einen Träger (1), der dazu bestimmt ist, den Fühler auf einem Stutzen des Kreises derart zu montieren, dass diese Flüssigkeit in Kontakt mit wenigstens einem Teil des Fühlers tritt;
- eine korrodierbare Membran (4) in Kontakt mit der Flüssigkeit,
- ein optischer Anzeiger, der auf den Korrosionsgrad der Flüssigkeit reagiert;
**dadurch gekennzeichnet, dass** der optische Anzeiger ein Mittel (3) umfasst, das unter dem kombinierten Effekt des Reißens der korrodierbaren Membran (4) und der Druckdifferenz zwischen innerhalb und außerhalb des Kreises verschiebbar ist, wenigstens ein Dichtungsmittel (7), das auf diesem Mittel (3) montiert ist, wobei der optische Anzeiger (3) aus dem Stutzen und/oder dem Träger (1) austritt, wenn diese Membran (4) korrodiert ist.

2. Fühler nach Anspruch 1, **dadurch gekennzeichnet, dass** das verschiebbare Mittel (3) wenigstens teilweise außen von einem kolorierten Film (6) überdeckt ist.

3. Fühler nach einem der Ansprüche 1 oder 2, **dadurch gekennzeichnet, dass** das verschiebbare Mittel (3) eine Magnetzone (11) umfasst und dass er im übrigen einen Kontaktschalter (12) umfasst, der außerhalb des Stutzens angeordnet ist und mit der magnetischen Zone (11) zusammenwirkt und dabei Teil des elektrischen Kreises (13) bildet, wodurch der Alarm (14) aktiviert werden kann, wenn die magnetische Zone (11) sich gegenüber dem Kontaktschalter (12) befindet.

4. Fühler nach Anspruch 1, **dadurch gekennzeichnet, dass** er ein zweites Dichtungsmittel (8; 17) umfasst, das dazu bestimmt ist, flüssige oder feste Partikel daran zu hindern, in das Innere des Fühlers einzudringen und die Bewegung des verschiebbaren Mittels zu behindern.

5. Fühler nach einem der vorhergehenden Ansprüche, **dadurch gekennzeichnet, dass** das verschiebbare Mittel (3) einen Kolben umfasst, der in diesem Träger (1) gelagert und gleitverschieblich ist.

6. Fühler nach Anspruch 5, **dadurch gekennzeichnet, dass** das zweite Dichtungsmittel eine auf dem Kolben montierte O-Ringdichtung ist.

7. Fühler nach Anspruch 5, **dadurch gekennzeichnet, dass** der Kolben (3) ein spitz zulaufendes Ende (10) hat und dass das zweite Dichtungsmittel eine die Öffnung der Kolbenlagerung überdeckende Membran (8) ist, die in der Lage ist, durch das spitze Ende (10) des Kolbens durchbohrt zu werden, wenn dieses sich vom Stutzen aus nach außen verschiebt.

8. Fühler nach einem der vorhergehenden Ansprüche, **dadurch gekennzeichnet, dass** er im übrigen einen Gitterträger (5) umfasst, der auf dem Träger (1) zwischen dieser korrodierbaren Membran (4) und dem Kolben (3) fixiert ist.

## Claims

1. A sensor for monitoring the cooling liquid circulating in a circuit of a heat exchanger comprising:
- a support (1) intended to mount the sensor on a pipe of the circuit so that said liquid is in contact with at least part of the sensor,
- a corrodible membrane (4) in contact with the liquid.
- a visual indicator reacting to the degree of corrosion of the liquid, **characterised in that** the visual indicator includes a device (3) which can move under the combined effect of the breaking of the corrodible membrane (4) and of the pressure difference between the inside and outside of the circuit, at least one means of sealing (7) mounted on device (3), the visual indicator (3) protruding from the pipe and/or support (1) when said membrane (4) is corroded.

2. A sensor according to Claim 1, **characterised in that** the movable device (3) is at least partly covered externally with a coloured film (6).

3. A sensor as claimed in either of claims 1 or 2, **characterised in that** the movable device (3) comprises a magnetised zone (11) and **in that** it also comprises a contactor (12) placed outside the pipe, operating in conjunction with the magnetised zone (11) and belonging to an electric circuit (13) allowing the alarm (14) to be activated when the magnetised zone (11) is opposite the contactor (12).

4. A sensor according to Claim 1, **characterised in that** it comprises a second means of sealing (8; 17) intended to prevent liquid or solid particles from getting into the sensor and from hampering the movement of the movable device.

5. A sensor as claimed in any one of the previous claims, **characterised in that** the movable device (3) includes a piston housed and sliding in said support (1).

6. A sensor according to Claim 5, **characterised in that** the second means of sealing is an O-ring mounted on the piston.

7. A sensor according to Claim 5, **characterised in that** the piston (3) comprises a pointed end (10) and **in that** the second means of sealing is a membrane (8) covering the opening (9) of the piston housing that can be pierced by the pointed end (10) of the piston when the latter moves towards the outside of the pipe.

8. A sensor as claimed in any one of the previous claims, **characterised in that** it also comprises a support grid (5) fastened to support (1) between the said corrodable membrane (4) and the piston (3).
